**Europäisches Patentamt**

**European Patent Office**

**Office européen des brevets**

(19)

(11) Veröffentlichungsnummer: **0 301 295 B1**

(12) # EUROPÄISCHE PATENTSCHRIFT

(45) Veröffentlichungstag der Patentschrift:
24.07.91 Patentblatt 91/30

(51) Int. Cl.⁵: **G21C 3/06, C22C 16/00,**
**G21C 3/07**

(21) Anmeldenummer: **88110964.9**

(22) Anmeldetag: **08.07.88**

(54) **Brennstab für ein Kernreaktorbrennelement.**

(30) Priorität: **21.07.87 DE 3724145**
**15.02.88 DE 3804724**

(43) Veröffentlichungstag der Anmeldung:
**01.02.89 Patentblatt 89/05**

(45) Bekanntmachung des Hinweises auf die
Patenterteilung:
**24.07.91 Patentblatt 91/30**

(84) Benannte Vertragsstaaten:
**BE DE ES FR IT SE**

(56) Entgegenhaltungen:
**EP-A- 0 212 351**
**DE-A- 3 310 054**
**DE-B- 1 207 096**
**DE-B- 1 608 735**

(73) Patentinhaber: **Siemens Aktiengesellschaft**
**Wittelsbacherplatz 2**
**W-8000 München 2 (DE)**

(72) Erfinder: **Stehle, Heinz, Dr.**
**Schulstrasse 2**
**W-8521 Marloffstein (DE)**
Erfinder: **Steinberg, Eckard**
**Mistelweg 8**
**W-8520 Erlangen (DE)**
Erfinder: **Weidinger, Hans, Dr.**
**Danziger Strasse 22**
**W-8500 Nürnberg (DE)**
Erfinder: **Garzarolli, Friedrich**
**Böhmerwaldstrasse 12**
**W-8552 Höchstadt/Aisch (DE)**

# Beschreibung

Die Erfindung betrifft einen Brennstab für ein Kernreaktorbrennelement mit Kernbrennstoff, der sich in einem Hüllrohr befindet.

Derartige Brennstäbe sind bereits üblich. Sie werden in das Skelett des Kernreaktorbrennelementes eingebaut. Dieses Kernreaktorbrennelement wird schließlich in einen Kernreaktor eingesetzt, in dem es beispielsweise mit Leichtwasser gekühlt wird. In diesem Kernreaktor haben Hüllrohre aus Zirkoniumlegierung einen verhältnismäßig geringen Einfangsquerschnitt für thermische Neutronen.

An der Außenseite der Hüllrohre der Brennstäbe findet während des Betriebes im Kernreaktor Korrosion statt, die die Einsatzfähigkeit des Kernreaktorbrennelementes im Kernreaktor zeitlich begrenzt. Die üblichen Einsatzzeiten sind 3 bis 4 Jahre.

Aus der europäischen Patentanmeldung 0 212 351 ist bereits bekannt, die Einsatzfähigkeit solcher Kernreaktorbrennelemente zu verbessern und ihre Einsatzzeiten im Kernreaktor zu verlängern durch einen Brennstab mit Kernbrennstoff, der sich in einem Hüllrohr befindet, welches aus einer Zirkoniumlegierung mit den Legierungsbestandteilen 1.2 bis 1.7 Gew.-% Zinn, 0.07 bis 0.2 Gew.-% Eisen, 0.05 bis 0.15 Gew.-% Chrom, 0.03 bis 0.08 Gew.-% Nickel, 0.07 bis 0.15 Gew.-% Sauerstoff und mit der Gew.-%-Summe für die Legierungsbestandteile Eisen, Chrom und Nickel im Bereich von 0.18 bis 0.38 Gew.-% oder mit den Legierungsbestandteilen 1.2 bis 1.7 Gew.-% Zinn, 0.18 bis 0.24 Gew.-% Eisen, 0.07 bis 0.13 Gew.-% Chrom, 0.10 bis 0.16 Gew.-% Sauerstoff und mit der Gew.-%-Summe für die Legierungsbestandteile teile Eisen und Chrom im Bereich von 0.28 bis 0.37 Gew.-% besteht. Auf der Außenseite weist dieses Hüllrohr eine Oberflächenschicht aus einer anderen Zirkoniumlegierung auf mit einer Schichtdicke im Bereich von 5 bis 20% der gesamten Wandstärke des Hüllrohres sowie mit 0 bis 1 Gew.-% Eisen als Legierungsbestandteil und mit mindestens einem Legierungsbestandteil aus der Gruppe Vanadium mit 0.1 bis 1 Gew.-%, Platin mit 0.1 bis 1 Gew.-% und Kupfer mit 1 bis 3 Gew.-%.

· Ein solches Hüllrohr wird durch Pilgern eines rohrförmigen Preßlings erzielt, der durch Strangverpressen eines Rohrrohlings mit einem Innenrohr gewonnen wird, auf dem ein Außenrohr aus der anderen Zirkoniumlegierung für die Oberflächenschicht des Hüllrohres sitzt.

Dieser Rohrrohling darf nur mit geringer Verformung pro Pilgerschritt d.h. langsam gepilgert werden, wenn dabei das Außenrohr aus der Zirkoniumlegierung für die Oberflächenschicht des Hüllrohres nicht reißen soll.

Der Erfindung liegt die Aufgabe zugrunde, die Fertigung des Hüllrohres und damit auch des Brennstabes durch Beschleunigen des Pilgerns wirtschaftlicher zu gestalten.

Diese Aufgabe wird erfindungsgemäß durch einen Brennstab nach einem der Patentansprüche 1 bis 3 gelöst.

Die Erfindung beruht auf der Erkenntnis, daß die Zirkoniumlegierung, aus der die Oberflächenschicht auf der Außenseite des Hüllrohres dieses Brennstabes besteht, wie beim bekannten Brennstab weit korrosionsbeständiger ist als die Zirkoniumlegierung, aus der der Rest des Hüllrohres besteht. Auch ist dieses Hüllrohr sehr kriechfest. Ferner sind die Absorptionsverluste an thermischen Neutronen im Kernreaktor durch die Legierungsbestandteile in der Oberflächenschicht des Hüllrohres verhältnismäßig gering. Trotzdem kann diese Zirkoniumlegierung beim Pilgern des Rohrrohlings besonders stark ohne Aufreißen verformt werden, so daß für das Pilgern nur wenig Zeit erforderlich ist.

Der Patentanspruch 4 ist auf eine günstige Weiterbildung des Brennstabes gerichtet, durch die eine weitere Verbesserung der Kriechfestigkeit des Hüllrohres des Brennstabes erzielt wird.

Es sind zwar Brennstäbe mit einem Hüllrohr bekannt, das ausschließlich aus einer Zirkonium-Niob-Legierung besteht. Ein solches Hüllrohr kriecht jedoch in einem Kernreaktor unter den dort herrschenden Bedingungen ganz erheblich, d.h. es wird durch den Druck des Kühlmittels im Kernreaktor auf den Kernbrennstoff aufgepreßt, so daß sein Außendurchmesser schrumpft und der Brennstab selbst in zum Skelett von Kernreaktorbrennelementen gehörenden Abstandhaltern nicht mehr fest durch Kraftschluß mit Federn gehaltert bleibt und deshalb in Schwingungen geraten und beschädigt werden kann.

Versuche in einem Kernreaktor zeigten, daß die Korrosionsgeschwindigkeit eines Proberohres aus einer Zirkoniumlegierung mit 2.5 Gew.-% Niob als Legierungsbestandteil oder mit 0.25 Gew.-% Zinn, 0.5 Gew.-% Eisen und 0.05 Gew.-% Chrom als Legierungsbestandteile in Wasser nur etwa ein Drittel der Korrosionsgeschwindigkeit eines Vergleichsrohres aus einer Zirkoniumlegierung mit der Warenbezeichnung Zircaloy 4 unter gleichen Bedingungen beträgt, die neben dem Zirkonium als weitere Legierungsbestandteile 1.2 bis 1.7 Gew.-% Zinn, 0.18 bis 0.24 Gew.-% Eisen, 0.07 bis 0.13 Gew.-% Chrom und 0.1 bis 0.16 Gew.-% Sauerstoff enthält und in der die Summe der Gewichtsprozente der Legierungsbestandteile Eisen und Chrom im Bereich von 0.28 bis 0.37 Gew.-% liegt. Die Einsatzzeit eines Kernreaktorbrennelementes mit erfindungsgemäßen Brennstäben in einem Kernreaktor kann also mindestens um ein Jahr länger sein als die eines Kernreaktorbrennelementes mit Brennstäben, deren Hüllrohre beispielsweise auch an der Außenseite aus Zircaloy 4 bestehen.

Während ein Rohr aus einer Zirkonium-Vanadium-Eisen-Legierung mit 0.5 Gew.-% Eisen und 0.25 Gew.-% Vanadium bereits bei einem einzigen Pilgerschritt mit etwa 40% Kaltverformung zu reißen beginnt, tritt dieses Reißen bei einem Rohr mit den gleichen Abmessungen aus der Zirkonium-Niob-Legierung mit 2.5 Gew.-% Niob oder der Zirkonium-Zinn-Eisen-Chrom-Legierung mit 0.25 Gew.-% Zinn, 0.5 Gew.-% Eisen und 0.05 Gew.-% Chrom erst bei einem einzigen Pilgerschritt mit mehr als 80% Kaltverformung auf.

Zum Herstellen eines Hüllrohres für einen erfindungsgemäßen Brennstab wird vorteilhafterweise von einem Rohrrohling ausgegangen, der ein Innenrohr beispielsweise aus Zircaloy 4 und ein auf diesem Innenrohr sitzendes Außenrohr aus der Zirkonium-Niob-Legierung oder der Zirkonium-Zinn-Eisen-Chrom-Legierung aufweist. Beide Rohre wurden im Vakuum an beiden Enden miteinander verschweißt, so daß sich zwischen den beiden Rohren kein Gas befindet. Dieser Rohrrohling wird auf eine Temperatur im Bereich von 650°C bis 850°C aufgewärmt und dann strangverpreßt (siehe z.B. Hütte, Taschenbuch für Eisenhüttenleute, "Eisenhütte", 1961, Seite 1083). Infolge der Koextrusion ergibt sich eine feste metallurgische Verbindung zwischen den beiden Zirkoniumlegierungen.

Durch anschließendes Pilgern des rohrförmigen Preßlings wird schließlich das endgültige Hüllrohr für den Brennstab gewonnen, welches beispielsweise einen Durchmesser von 10.7 mm und eine Wandstärke von 0.72 mm haben kann. Die Oberflächenschicht aus der niobhaltigen oder der zinn-eisen-chromhaltigen Zirkoniumlegierung bedeckt die gesamte Außenseite dieses Hüllrohres und kann beispielsweise 0.1 mm dick sein. Eine Pilgermaschine ist z.B. in der US-Patentschrift 42 33 834 beschrieben.

## Patentansprüche

1. Brennstab für ein Kernreaktorbrennelement mit Kernbrennstoff, der sich in einem Hüllrohr befindet, welches aus einer ersten Zirkoniumlegierung mit den Legierungsbestandteilen 1.2 bis 2 Gew.-% Zinn, 0.07 bis 0.2 Gew.-% Eisen, 0.05 bis 0.15 Gew.-% Chrom, 0.03 bis 0.08 Gew.-% Nickel, 0.07 bis 0.15 Gew.-% Sauerstoff und mit der Gew.-%-Summe für die Legierungsbestandteile Eisen, Chrom und Nickel im Bereich von 0.18 bis 0.38 Gew.-% oder mit den Legierungsbestandteilen 1.2 bis 2 Gew.-% Zinn, 0.18 bis 0.24 Gew.-% Eisen, 0.07 bis 0.13 Gew.-% Chrom, 0.10 bis 0.16 Gew.-% Sauerstoff und mit der Gew.-%-Summe für die Legierungsbestandteile Eisen und Chrom im Bereich von 0.28 bis 0.37 Gew.-% besteht und welches auf der Außenseite eine Oberflächenschicht aus einer zweiten Zirkoniumlegierung aufweist mit einer Schichtdicke im Bereich von 5 bis 20% der gesamten Wandstärke des Hüllrohres sowie mit mindestens einem Legierungsbestandteil aus der Gruppe Eisen, Chrom, Nickel und Zinn mit der Gew.-%-Summe der Legierungsbestandteile dieser Gruppe von 0.4 bis 1 Gew.-% und mit 0.2 bis 3 Gew.-% Niob als weiterem Legierungsbestandteil.

2. Brennstab für ein Kernreaktorbrennelement mit Kernbrennstoff, der sich in einem Hüllrohr befindet, welches aus einer ersten Zirkoniumlegierung mit den Legierungsbestandteilen 1.2 bis 2 Gew.-% Zinn, 0.07 bis 0.2 Gew.-% Eisen, 0.05 bis 0.15 Gew.-% Chrom, 0.03 bis 0.08 Gew.-% Nickel, 0.07 bis 0.15 Gew.-% Sauerstoff und mit der Gew.-%-Summe für die Legierungsbestandteile Eisen, Chrom und Nickel im Bereich von 0.18 bis 0.38 Gew.-% oder mit den Legierungsbestandteilen 1.2 bis 2 Gew.-% Zinn, 0.18 bis 0.24 Gew.-% Eisen, 0.07 bis 0.13 Gew.-% Chrom, 0.10 bis 0.16 Gew.-% Sauerstoff und mit der Gew.-%-Summe für die Legierungsbestandteile Eisen und Chrom im Bereich von 0.28 bis 0.37 Gew.-% besteht und welches auf der Außenseite eine Oberflächenschicht aus einer zweiten Zirkoniumlegierung aufweist mit einer Schichtdicke im Bereich von 5 bis 20% der gesamten Wandstärke des Hüllrohres sowie mit mindestens einem Legierungsbestandteil aus der Gruppe Eisen, Chrom, Nickel und Zinn mit der Gew.-%-Summe der Legierungsbestandteile dieser Gruppe von 0.4 bis 1 Gew.-%.

3. Brennstab für ein Kernreaktorbrennelement mit Kernbrennstoff, der sich in einem Hüllrohr befindet, welches aus einer ersten Zirkoniumlegierung mit den Legierungsbestandteilen 1.2 bis 2 Gew.-% Zinn, 0.07 bis 0.2 Gew.-% Eisen, 0.05 bis 0.15 Gew.-% Chrom, 0.03 bis 0.08 Gew.-% Nickel, 0.07 bis 0.15 Gew.-% Sauerstoff und mit der Gew.-%-Summe für die Legierungsbestandteile Eisen, Chrom und Nickel im Bereich von 0.18 bis 0.38 Gew.-% oder mit den Legierungsbestandteilen 1.2 bis 2 Gew.-% Zinn, 0.18 bis 0.24 Gew.-% Eisen, 0.07 bis 0.13 Gew.-% Chrom, 0.10 bis 0.16 Gew.-% Sauerstoff und mit der Gew.-%-Summe für die Legierungsbestandteile Eisen und Chrom im Bereich von 0.28 bis 0.37 Gew.-% besteht und welches auf der Außenseite eine Oberflächenschicht aus einer zweiten Zirkoniumlegierung aufweist mit einer Schichtdicke im Bereich von 5 bis 20% der gesamten Wandstärke des Hüllrohres sowie mit 0.2 bis 3 Gew.-% Niob als Legierungsbestandteil.

4. Brennstab nach einem der Ansprüche 1 bis 3, **dadurch gekennzeichnet**, daß der Legierungsbestandteil Zinn in der ersten Zirkoniumlegierung 1.5 bis 2 Gew.-% beträgt.

## Claims

1. A fuel rod for a nuclear reactor fuel element with nuclear fuel, which is located in a cladding tube, which consists of a first zirconium alloy having the alloy components of from 1.2 to 2% by weight of tin, 0.07 to 0.2% by weight of iron, 0.05 to 0.15% by weight of chromium, 0.03 to 0.08% by weight of nickel, 0.07 to 0.15% by weight of oxygen, and a total percentage by weight for the alloy components iron, chromium and nickel in the range of from 0.18 to 0.38% by weight, or with the alloy components of from 1.2 to 2% by weight of tin, 0.18 to 0.24% by weight of iron, 0.07 to 0.13% by weight of chromium, 0.10 to 0.16% by weight of oxygen and a total percentage by weight for the alloy components iron and chromium in the range of 0.28 to 0.37% by weight, and which has on the outer side a surface layer formed of a second zirconium alloy having a layer thickness in the region of from 5 to 20% of the total wall thickness of the cladding tube, said second alloy being formed of at least one alloy component from the group consisting of iron, chromium, nickel and tin having a total percentage by weight of the alloy components of this group of from 0.4 to 1% by weight and with 0.2 to 3% by weight niobium as further alloy component.

2. A fuel rod for a nuclear reactor fuel element with nuclear fuel, which is located in a cladding tube, which consists of a first zirconium alloy having the alloy components of from 1.2 to 2% by weight of tin, 0.07 to 0.2% by weight of iron, 0.05 to 0.15% by weight of chromium, 0.03 to 0.08% by weight of nickel, 0.07 to 0.15% by weight of oxygen, and a total percentage by weight for the alloy components iron, chromium and nickel in the range of from 0.18 to 0.38% by weight, or with the alloy components of from 1.2 to 2% by weight of tin, 0.18 to 0.24% by weight of iron, 0.07 to 0.13% by weight of chromium, 0.10 to 0.16% by weight of oxygen and a total percentage by weight for the alloy components iron and chromium in the range of 0.28 to 0.37% by weight, and which has on the outer side a surface layer formed of a second zirconium alloy having a layer thickness in the region of from 5 to 20% of the total wall thickness of said cladding tube, said second alloy being formed of at least one alloy component from the group consisting of iron, chromium, nickel and tin having a total percentage by weight of the alloy components of this group of from 0.4 to 1% by weight.

3. A fuel rod for a nuclear reactor fuel element with nuclear fuel, which is located in a cladding tube, which consists of a first zirconium alloy having the alloy components of from 1.2 to 2% by weight of tin, 0.07 to 0.2% by weight of iron, 0.05 to 0.15% by weight of chromium, 0.03 to 0.08% by weight of nickel, 0.07 to 0.15% by weight of oxygen, and a total percentage by weight for the alloy components iron, chromium and nickel in the range of from 0.18 to 0.38% by weight, or with the alloy components of from 1.2 to 2% by weight of tin, 0.18 to 0.24% by weight of iron, 0.07 to 0.13% by weight of chromium, 0.10 to 0.16% by weight of oxygen and a total percentage by weight for the alloy components iron and chromium in the range of 0.28 to 0.37% by weight, and which has on the outer side a surface layer formed of a second zirconium alloy having a layer thickness in the region of from 5 to 20% of the total wall thickness of said cladding tube as well as with 0.2 to 3% by weight niobium as alloy component.

4. A fuel rod according to one of claims 1 to 3, characterised in that the alloy component tin represents 1.5 to 2% by weight in the first zirconium alloy.

**Revendications**

1. Crayon combustible pour un assemblage combustible de réacteur nucléaire, comprenant une matière combustible nucléaire qui se trouve dans un tube de gainage, constitué d'un premier alliage de zirconium ayant, comme constituants d'alliage, de 1,2 à 2% en poids d'étain, de 0,07 à 0,2% en poids de fer, de 0,05 à 0,15% en poids de chrome, de 0,03 à 0,08% en poids de nickel, de 0,07 à 0,15% en poids d'oxygène, la somme des pourcentages en poids des constituants de l'alliage que sont le fer, le chrome et le nickel étant comprise entre 0,18 et 0,38% en poids ou ayant, comme constituants d'alliage, de 1,2 à 2% en poids d'étain, de 0,18 à 0,24% en poids de fer, de 0,07 à 0,13% en poids de chrome, de 0,10 à 0,16% en poids d'oxygène, la somme des pourcentages en poids des constituants d'alliage que sont le fer et le chrome étant comprise entre 0,28 et 0,37% en poids et présentant, du côté extérieur, une couche superficielle en un second alliage de zirconium ayant une épaisseur de couche représentant de 5 à 20% de l'épaisseur totale de la paroi du tube de gainage, ainsi qu'au moins un constituant d'alliage du groupe du fer, du chrome, du nickel et de l'étain, la somme des pourcentages en poids des constituants d'alliage de ce groupe étant comprise entre 0,4 et 1% en poids et ayant comme autres constituants d'alliage de 0,2 à 3% en poids de niobium.

2. Crayon combustible pour un assemblage combustible de réacteur nucléaire, comprenant une matière combustible nucléaire qui se trouve dans un tube de gainage, constitué d'un premier alliage de zirconium ayant, comme constituants d'alliage, de 1,2 à 2% en poids d'étain, de 0,07 a 0,2% en poids de fer, de 0,05 à 0,15% en poids de chrome, de 0,03 à 0,08% en poids de nickel, de 0,07 à 0,15% en poids d'oxygène, la somme des pourcentages en poids des constituants de l'alliage que sont le fer, le chrome et le nickel étant comprise entre 0,18 et 0,38% en poids ou ayant, comme constituants d'alliage, de 1,2 a 2% en poids d'étain, de 0,18 a 0,24% en poids de fer, de 0,07 a 0,13% en poids de chrome, de 0,10 a 0,16% en poids d'oxygène, la somme des pourcentages en poids des constituants d'alliage que sont le fer et le chrome étant comprise entre 0,28 et 0,37% en poids et présentant, du côté extérieur, une couche superficielle en un second alliage de zirconium ayant une épaisseur de couche représentant de 5 à 20% de l'épaisseur totale de la paroi du tube de gainage, ainsi qu'au moins un constituant d'alliage du groupe du fer, du chrome, du nickel et de l'étain, la somme des pourcentages en poids des constituants d'alliage de ce groupe étant comprise entre 0,4 et 1% en poids.

3. Crayon combustible pour un assemblage combustible de réacteur nucléaire, comprenant une matière combustible nucléaire qui se trouve dans un tube de gainage, constitué d'un premier alliage de zirconium ayant, comme constituants d'alliage, de 1,2 à 2% en poids d'étain, de 0,07 à 0,2% en poids de fer, de 0,05 à 0,15% en poids de chrome, de 0,03 à 0,08% en poids de nickel, de 0,07 à 0,15% en poids d'oxygène, la somme des pourcentages en poids des constituants de l'alliage que sont le fer, le chrome et le nickel étant comprise entre 0,18 et 0,38% en poids ou ayant, comme constituants d'alliage, de 1,2 à 2% en poids d'étain, de 0,18 a 0,24% en poids de fer, de 0,07 à 0,13% en poids de chrome, de 0, 10 à 0, 16% en poids d'oxygène, la somme des pourcentages en poids des constituants d'alliage que sont le fer et le chrome étant comprise entre 0,28 et 0,37% en poids et présentant, du côté extérieur, une couche superficielle en un second alliage de zirconium ayant une épaisseur de couche représentant de 5 à 20% de l'épaisseur totale de la paroi du tube de gainage, ainsi que comme constituants d'alliage de 0,2 à 3% en poids de niobium.

4. Crayon combustible suivant l'une des revendications 1 à 3, caractérisé, en ce que le constituant d'alliage qu'est l'étain représente dans le premier alliage de zirconium de 1,5 à 2% en poids.